# EUROPÄISCHE PATENTSCHRIFT

(11) **EP 2 637 792 B1**
(45) Veröffentlichungstag und Bekanntmachung des Hinweises auf die Patenterteilung: **18.04.2018**
(21) Anmeldenummer: 12705629.9
(22) Anmeldetag: 07.02.2012
(51) Int. Cl.: B02C 17/24, B02C 17/18, B02C 25/00, H02P 1/34, H02P 25/24

(54) **ANTRIEBSSYSTEM FÜR EINE KUGELMÜHLE UND VERFAHREN ZUM BETREIBEN EINER KUGELMÜHLE**
DRIVING SYSTEM FOR A BALL MILL AND A METHOD OF OPERATING A BALL MILL
SYSTÈME D'ENTRAÎNEMENT POUR UN BROYEUR À BOULETS ET PROCÉDÉ DE FONCTIONNEMENT D'UN BROYEUR À BOULETS

(30) Priorität: 18.02.2011 DE 102011004416
(43) Veröffentlichungstag der Anmeldung: 18.09.2013
(73) Patentinhaber: Siemens Aktiengesellschaft, 80333 München (DE)
(72) Erfinder: HOLLAND, Maarten, 91099 Poxdorf (DE)
(86) Internationale Anmeldenummer: PCT/EP2012/052025
(87) Internationale Veröffentlichungsnummer: WO 2012/110358

(56) Entgegenhaltungen:
- DE-A1- 4 410 959
- DE-A1-102004 015 057
- GB-A- 2 011 198

## Beschreibung

Die Erfindung betrifft ein Antriebssystem für eine Kugelmühle und ein Verfahren zum Betreiben einer Kugelmühle.

Eine Kugelmühle ist ein Gerät zur Grob-, Fein- und Feinstzerkleinerung oder Homogenisierung von Mahlgut. Sie umfasst einen Mahlraum, üblicherweise gebildet durch einen Innenraum einer in Rotation versetzbaren Trommel, in der das Mahlgut durch Mahlkörper zerkleinert wird. Kugelmühlen werden sowohl bei der Nass- als auch bei der Trockenmahlung eingesetzt. Unter den Begriff Kugelmühle fallen insbesondere Sturzmühlen, Trommelmühlen und Rohrmühlen. Als Mahlkörper werden in Kugelmühlen nicht nur kugelförmige Mahlkörper, sondern auch andersartig geformte, wie zylinderförmige Mahlkörper usw. verwendet.

Kugelmühlen werden beispielsweise in Bergbaubetrieben zum Mahlen von Erz eingesetzt. In anderen Industriezweigen können als zu mahlende Stoffe keramische Materialien oder Materialgemische damit aufgemahlen werden. Beispielsweise werden in der keramischen Industrie Kugelmühlen bei der Herstellung von Gießschlickern eingesetzt.

Für derartige Mühlen existieren verschiedene Antriebskonzepte. Bekannt ist die Verwendung von getriebelosen Direktantrieben in Form von Ringmotoren. Einfacher und kostengünstiger ist der Betrieb einer Kugelmühle mit Hilfe eines Schleifringläufermotors.

Beim Stillstand einer Kugelmühle kann sich das - an sich lockere zu mahlende Gut in der Mühle verfestigen. Dies geschieht zum Beispiel, wenn die Mühle für mehrere Stunden oder Tage zu Wartungszwecken abgeschaltet wird. Das Mahlgut verfestigt sich dann und klebt an der Innenwandung der Trommel fest. Eine derartige Situation wird als "Anbackung" oder "frozen Charge" bezeichnet. Wird beim Auftreten einer solchen Anbackung die Trommel der Kugelmühle wieder in Rotation versetzt, so bleibt nahezu das gesamte zu mahlende Material, inklusive der beigefügten Mahlkörper, als Einheit in festem Zustand an der Mühlenwand haften und wird als solche aus einer etwa waagerechten Lage rotiert. Erreicht die Trommel der Mühle dann einen kritischen Drehwinkel, die Anbackung also eine kritische Schräglage, löst sich in der Regel schlagartig ein Großteil der Anbackung. Durch die hohe Masse der herabfallenden Anbackung kann eine Kugelmühle schwer beschädigt oder gar zerstört werden.

Für kleinere Mühlen, welche in der Regel mit Schleifringläufermotoren angetrieben werden, ist es bekannt, zum Beispiel in Form eines "Mill Safety Start System" der Fa. SDG Technologies, eine Anbackung automatisch zu erkennen. Durch das bekannte System kann die Anbackung aber nicht aufgelöst werden. Um eine derartige Anbackung dann aufzulösen, ist es bekannt, der Anbackung Wasser zuzuführen und diese - auch unter Einsatz mechanischer Mittel - aufzulösen.

Beim bekannten "Mill Safety Start System" erfolgt also lediglich eine Erfassung bzw. Erkennung des "Frozen Charge"-Zustandes, also des Vorliegens einer Anbackung. Eine Abschaltung der Mühle erfolgt ebenfalls automatisch. Ein Lösen der Anbackung z.B. durch Fluten oder mechanisches Lösen muss jedoch weiterhin händisch durchgeführt werden. Ein Neustart der Mühle erfolgt sodann wieder ebenfalls händisch.

Aus der DE 10 2004 015 057 A1 ist, insbesondere für größere Mühlen mit Ringmotor, ein Verfahren bekannt, um durch gezielte Ansteuerung des Motors der Mühle eine Anbackung aufzulockern. Das bekannte Verfahren ist bei einer Mühle mit Ringmotor leicht zu implementieren, da hier lediglich eine Programmierung des Motorreglers stattfindet. Ein entsprechender Regler ist im Gegensatz zu Schleifringläufermotoren bereits vorhanden. Ein solches Verfahren ist z.B. als Produkt "Frozen Charge Shaker" der Firma Siemens bekannt. Hierbei handelt es sich im Wesentlichen lediglich um eine Reglerprogrammierung des Reglers des Ringmotors, da ein entsprechender Regler im System bereits vorhanden ist. Der Grund, dass das für Ringmotoren bekannte System bei Schleifringläufermotoren nicht anwendbar ist, liegt damit darin, dass der Antrieb in Form eines Schleifringläufermotors nur gesteuert, jedoch nicht geregelt ist. Ein Hin- und Herbewegen bzw. Schütteln der Anbackung in der Mühle, wie es im bekannten Verfahren angewendet wird, ist mit Standardantrieben, d.h. Schleifringläufermotoren daher nicht möglich.

Aufgabe der vorliegenden Erfindung ist es, ein Antriebssystem für eine von einem Schleifringläufermotor angetriebene Kugelmühle zu verbessern und ein verbessertes Verfahren zum Betreiben einer derartigen Kugelmühle anzugeben.

Hinsichtlich des Antriebsystems wird die Aufgabe gelöst durch ein Antriebssystem gemäß Patentanspruch 1 für eine Kugelmühle, welche von einem Schleifringläufermotor angetrieben wird. Dem Motor bzw. dem Gesamtsystem aus Motor und Mühle ist hierbei ein Kennlinienfeld zugeordnet. Das Kennlinienfeld setzt über eine Kennlinie das Drehmoment des Motors mit einer weiteren Kenngröße des Motors in Beziehung. Gemäß der Erfindung weist das Kennlinienfeld mindestens zwei verschiedene Kennlinien auf. Weiterhin weist das Antriebssystem ein Schaltelement auf, welches das Antriebssystem bei konstantem Wert der Kenngröße sprunghaft zwischen beiden Kennlinien umschaltet.

Die Kennlinien beschreiben einen jeweiligen Zusammenhang zwischen dem Drehmoment und einer weiteren Kenngröße, z.B. der Drehzahl des Motors. Wird nun bei konstantem Wert dieser Kenngröße, also beispielsweise bei konstanter Drehzahl, von der einen auf die andere Kennlinie sprunghaft umgeschaltet, so findet beim Umschalten auch ein Drehmomentsprung am Motor bzw. der Trommel der Kugelmühle statt. Grund hierfür ist, dass die Kennlinien - zumindest am Umschaltpunkt - nicht deckungsgleich sind, und sich daher bei gleichem Wert der Kenngröße im Drehmoment unterscheiden. Aus dem Kennliniensprung erfolgt daher im System aus Mühle, Motor und Leistungsversorgung ein Drehmomentstoß an der Trommel der Kugelmühle. Die Umschaltung erfolgt bei einer geeigneten Belastung bzw. Drehstellung der Trommel der Kugelmühle bzw. damit einer geeigneten Dreh- oder Schrägstellung der Anbackung. So kann, wie beim bekannten Verfahren für Mühlen mit Ringmotor die Anbackung von der Trommel der Kugelmühle losgeschüttelt werden. Durch den Drehmomentstoß erfolgt also ein Schütteln der Trommel der Mühle, so dass die Anbackung gelöst wird, wobei dies durch ein ruckartiges Springen zwischen zwei Kennlinien des Schleifringläufermotors erfolgt und so die Beladung der Mühle aufgewühlt wird.

Erfindungsgemäß wird dies durch die einfache Umschaltung zweier Kennlinien in einem Kennlinienfeld des Motors erreicht. Der Kugelmühle muss so keine aufwendige Steuerung bzw. Regelung hinzugefügt werden, sondern lediglich das erfindungsgemäße, auf die Kennlinien wirkende Schaltelement - in der Regel in Verbindung mit einem Parallelwiderstand - in das Antriebssystem der Mühle integriert werden. Es müssen außerdem lediglich entsprechend zwei Kennlinien im Kennlinienfeld implementiert werden, deren jeweiliges Drehmoment sich bei konstanter Kenngröße möglichst deutlich unterscheidet, um den o.g. Drehmomentsprung bei Umschaltung der Kennlinie zu bewirken. Ein zeitintensives Wässern der Kugelmühle und ein mechanischer Eingriff in die Anbackung, um diese zu lösen sind nicht mehr erforderlich. Voraussichtlich können so ca. in 80 % der Fälle die Anbackung gelöst werden.

Wie bereits erwähnt, ist in einer bevorzugten Ausführungsform des Antriebssystems die weitere Kenngröße die Drehzahl des Motors. Kennlinienfelder, welche Drehzahl und Drehmoment eines Schleifringläufermotors einer Kugelmühle in Beziehung zueinander setzen, sind besonders üblich.

In der Regel weist das Antriebssystem eine zum Motor führende Zuleitung auf, welche den Motor mit einem Antriebsstrom speist. In einer bevorzugten Ausführungsform ist dann in die Zuleitung - in der Regel also zwischen Motor und einem Läufer-Anlaufwiderstand - ein die Kennlinien des Motors bestimmender Widerstand geschaltet. Das Schaltelement ist dann ein den Widerstand bzw. dessen ohmschen Widerstandswert sprunghaft änderndes Schaltelement. Ein Schaltelement, welches einen Widerstand bzw. Widerstandswert sprunghaft ändert, ist besonders einfach, z.B. in Form von Leistungsschützen und umschaltbaren Festwiderständen, ausführbar. Durch die Änderung des Widerstandswertes in der Zuleitung ist besonders einfach die Kennlinie im Kennlinienfeld eines Motors veränderbar.

In der Regel ist in die Zuleitung zum Motor bzw. Läufer als Widerstand ohnehin ein Anlasswiderstand geschaltet. Dieser ist in der Regel veränderbar und zum Beispiel in Form eines Flüssigkeitsanlassers mit Kurzschlussschütz ausgeführt. Er dient dem Anfahren der Mühle mit verschiedenen Widerstandswerten bzw. Kennlinien. Ein Kurzschlussschütz zur Überbrückung des Anlasswiderstandes dient dazu, dass dieser im regulären Betrieb der Kugelmühle, also nach dem Anlaufen bzw. Anlassen kurzgeschlossen wird, und damit nicht weiter belastet wird. Mit anderen Worten ist dann der Motor unter Umgehung des Anlasswiderstandes direkt mit der Leistungsversorgung verbunden. Ein derartiger Anlasswiderstand ist zwar veränderlich, aber nicht sprunghaft veränderlich, sodass alleine durch Benutzen des Anlasswiderstandes bzw. dessen Veränderung das erfindungsgemäße Antriebssystem bzw. Verfahren nicht realisierbar ist. Zwar ist so auch eine Drehmomentveränderung, jedoch kein sprunghafter Drehmomentwechsel bzw. Drehmomentstoß realisierbar.

In einer bevorzugten Variante der o. g. Ausführungsform ist dann das Schaltelement in Reihe zum o. g. Widerstand geschaltet. Das Schaltelement ist hierbei parallel zu einem Zusatzwiderstand geschaltet, um diesen ggf. nach Art eines Kurzschlussschalters zu überbrücken. Besonders einfach ist es daher, in Reihe zum Anlasswiderstand die Zuleitung zum Motor aufzutrennen und hier das Schaltelement und den Zusatzwiderstand einzubauen. Das Schaltelement ist dann besonders einfach als den parallel geschalteten Zusatzwiderstand überbrückender Kurzschlussschalter ausgeführt. Beim Schließen des Kurzschlussschalters ist somit nur der übliche Anlasswiderstand in der Kugelmühle wirksam. Durch Öffnen des Kurzschlussschalters wird der Zusatzwiderstand schlagartig in die Zuleitung eingeschaltet, so dass sich der Gesamtwiderstand in der Zuleitung sprunghaft ändert und sich dadurch auch die Kennlinie im Kennlinienfeld sprunghaft gegenüber der Anlasskennlinie bzw. der Anlasskennlinienschar ändert bzw. eine hiervon nochmals deutlich abweichende Kennlinie gewählt wird. Mit anderen Worten bewirkt das Einschalten eines Zusatzwiderstandes zwischen Läufer und Flüssigkeitsanlasser ein ruckartiges Springen auf eine andere, zum Beispiel "längere" Kennlinie und damit eine Drehmomententlastung. Erfindungsgemäß enthält das Antriebssystem eine Steuer- und Auswerteeinheit, welche derart ausgebildet ist, dass sie eine Anbackung in der Kugelmühle erkennen kann und das Schaltelement in Abhängigkeit der Erkennung einer Anbackung ansteuert. Mit anderen Worten kann so durch die Steuer- und Auswerteeinheit eine automatische Erkennung des Auftretens einer Anbackung sowie eine automatische Betätigung des Schaltelements und damit ein automatisches Lösen der Anbackung durch Rütteln der Trommel der Kugelmühle realisiert werden.
In einer bevorzugten Variante dieser Ausführungsform erkennt die Steuer- und Auswerteeinheit eine Anbackung anhand einer Erfassung eines Drehwinkels der Trommel der Kugelmühle und eines den Motor speisenden Antriebsstromes. Da insbesondere bei bekanntem Drehwinkel der Antriebsstrom im Falle einer Anbackung deutlich vom Antriebsstrom einer regulär laufenden Kugelmühle abweicht, ist eine derartige Detektion einer Anbackung besonders einfach ausführbar.
Mit anderen Worten werden einer bekannten Kugelmühle dann zwei Komponenten hinzugeführt, nämlich ein kurzschließbarer Zusatzwiderstand in der Zuleitung als auch eine entsprechende intelligente Steuerung, welche z.B. aus einer Winkel- und Stromerfassung eine Anbackung detektieren und das Lösen der Anbackung veranlassen kann.

Hinsichtlich des Verfahrens wird die Aufgabe der Erfindung gelöst durch ein Verfahren gemäß Patentanspruch 7 zum Betreiben einer Kugelmühle, welche mit einem oben genannten Antriebssystem ausgerüstet ist. Erfindungsgemäß wird die Trommel der Kugelmühle aus ihrem Ruhezustand unter Benutzung bzw. Aktivierung der ersten Kennlinie bewegt. Diese Kennlinie ist in der Regel die normale Betriebskennlinie bzw. eine Schar von Anlasskennlinien des Antriebssystems bzw. der Kugelmühle. Während des Anfahrens der Kugelmühle wird überprüft, ob eine Anbackung in dieser vorliegt. In diesem Fall wird die Trommel der Kugelmühle aus der Ruhestellung soweit verfahren bzw. gedreht, dass sich die Anbackung ausgehend von ihrem Ruhezustand, nämlich einem waagerechten Verlauf der Anbackung, in einer Schräglage von z.B. 45° befindet. In einer derartigen Schräglage würde normalerweise, falls also keine Anbackung vorliegen würde, das aufzumahlende Material inklusive der Mahlkörper, sich im Inneren der Kugelmühle bereits bewegen, d.h. in Richtung der Schwerkraft nach unten rollen. In einer derartigen Schräglage wird dann das Schaltelement betätigt, um den Motor auf die zweite Kennlinie umzuschalten. Hierdurch ändert sich sprunghaft das Drehmoment an der Trommel der Kugelmühle, so dass diese und auch die Anbackung einen Drehmomentstoß erfährt, wodurch sich die Anbackung in der Regel löst.

In einer bevorzugten Ausführungsform des Verfahrens wird in einer jeweiligen Schräglage der Anbackung mehrfach sprunghaft durch Betätigung des Schaltelements zwischen den Kennlinien umgeschaltet. Hierdurch erfolgt nicht nur ein einmaliger Drehmomentstoß, sondern ein Rüttelbetrieb an der Trommel der Kugelmühle in der gleichen bzw. verschiedenen Schräglagen der Anbackung. Mit anderen Worten wird das Schaltelement also derart betrieben, dass durch Öffnen und Schließen zum Beispiel des oben genannten Kurzschlussschalters ein die Trommel der Kugelmühle rüttelnder Betriebsmodus aktiviert wird.

In einer weiteren bevorzugten Ausführungsform des Verfahrens wird eine Anbackung anhand einer Steuer- und Auswerteeinheit überwacht und im Falle einer festgestellten Anbackung automatisch durch Betätigung des Schaltelements zwischen den Kennlinien umgeschaltet. Mit anderen Worten erfolgt hier zum Beispiel, wie oben erläutert, eine vollautomatische Erkennung des Vorliegens einer Anbackung beim Anfahren einer Kugelmühle sowie das vollautomatische Lösen der Anbackung durch Rüttelbetrieb der Trommel der Kugelmühle.

Besonders bevorzugt wird das erfindungsgemäße Antriebssystem zum Aufmahlen von Erzen eingesetzt. Weiterhin ist es beispielsweise für Massemühlen, mittels welcher Gießschlicker hergestellt werden, geeignet.

Für eine weitere Beschreibung der Erfindung wird auf die Ausführungsbeispiele der Zeichnung verwiesen. Es zeigen, jeweils in einer schematischen Prinzipskizze:
- FIG 1: eine erfindungsgemäße Kugelmühle mit einer Anbackung während des Anfahrens,
- FIG 2: das Antriebssystem der Kugelmühle aus FIG 1,
- FIG 3: eine Anfahrkurve zwischen Drehmoment und Drehzahl bei einer Kugelmühle ohne Anbackung,
- FIG 4: ein Kennlinienfeld der Kugelmühle aus FIG 1,
- FIG 5: die Kugelmühle aus FIG 1 nach einem ersten Drehmomentstoß.

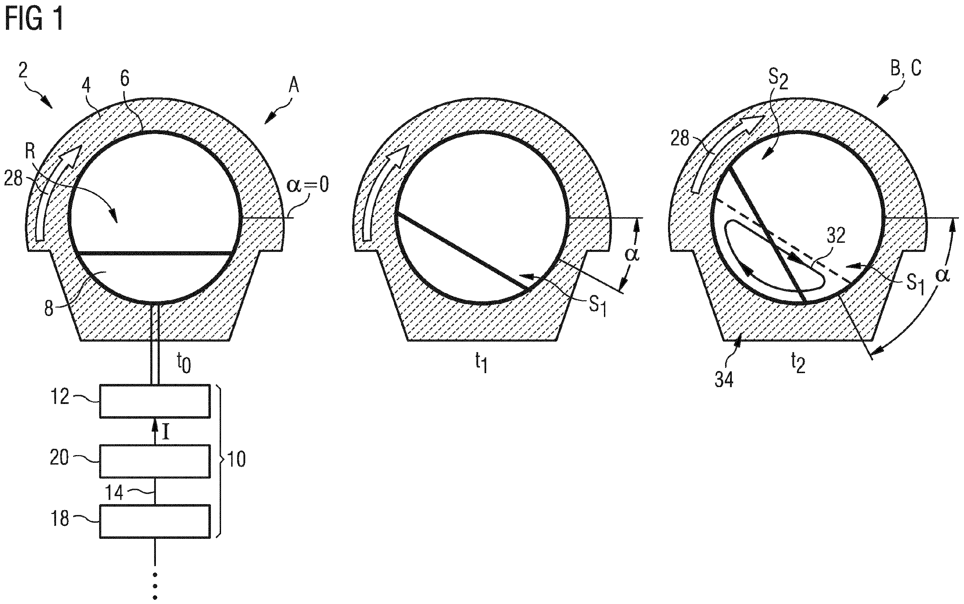

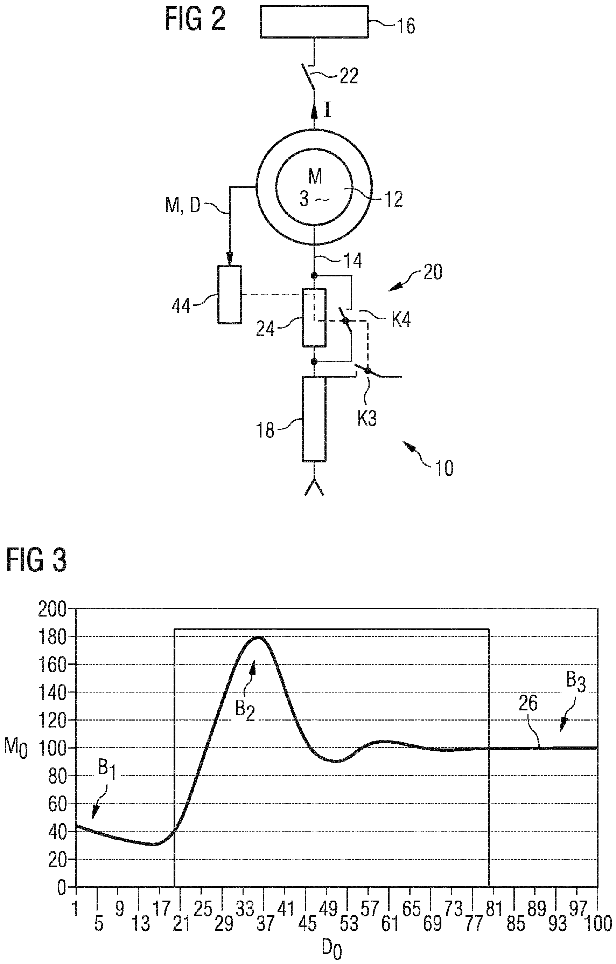

FIG 1 zeigt eine Kugelmühle 2, welche im Wesentlichen ein Gehäuse 4 und eine darin drehbar gelagerte Trommel 6 aufweist. Im Inneren der Trommel 6 befindet sich zu mahlendes Gut, hier in Form von Erz 8. Üblicherweise sind dem Mahlgut Mahlkörper beigefügt, welche hier aber nicht gesondert dargestellt sind. Nachfolgend werden daher bei Verwendung des Begriffs Erz vorhandene Mahlkörper gedanklich hinzugezählt. Die Kugelmühle 2 weist ein Antriebssystem 10 auf, welches einen die Trommel 6 antreibenden Motor 12 enthält. Dieser ist über eine Zuleitung 14 mit einer Leistungsversorgung 16 (siehe FIG 2) verbunden. Durch die Zuleitung fließt der Antriebsstrom I des Motors 12. Das Antriebssystem 10 umfasst außerdem einen in die Zuleitung 14 geschalteten Widerstand 18 in Form eines Anlasswiderstandes sowie eine in Reihe zu diesem in die Zuleitung 14 geschaltetes Schaltelement 20.

FIG 2 zeigt ergänzend das Antriebssystem 10 aus FIG 1 im Detail mit dem Motor 12 sowie dem in die Zuleitung 14 eingeschalteten Widerstand 18, welcher als variabler Widerstand, d.h. als Flüssigkeitsanlasser, ausgebildet ist. Der Widerstand 18 verfügt zusätzlich über einen Kurzschlussschütz K3, welcher dazu dient, den Widerstand 18 zum Läuferkreis hin zu überbrücken, d.h. in der Zuleitung 14 unwirksam zu schalten. Dem Motor 12 ist außerdem ein Hauptschalter 22 zugeordnet, um die gesamte Kugelmühle 2 an- oder abzuschalten. Der bisher in FIG 2 erläuterte Aufbau ist der einer regulären, bekannten Kugelmühle 2.

Erfindungsgemäß ist nun in das Antriebssystem 10 erweiternd als Schaltelement 20 ein Zusatzwiderstand 24 in die Zuleitung 14 eingeschaltet, welchem ein weiterer Kurzschlussschütz K4 parallel geschaltet ist, um den Zusatzwiderstand 24 zu überbrücken und dadurch zu deaktivieren. Durch das Schaltelement 20 wird mit anderen Worten die erfindungsgemäße Rüttel- bzw. Shaker-Funktionalität für die Trommel 6 der Kugelmühle 2 bewerkstelligt. Grund hierfür ist, dass sich durch die Veränderung des gesamten Widerstandswertes in der Zuleitung 14 die Drehmoment-Drehzahl-Kennlinie des Motors 12 ändert. Der Zusatzwiderstand 24 ist hierbei so dimensioniert, dass sich beide Kennlinien im Drehmoment bei einer gegebenen Drehzahl - zumindest an einem Arbeitspunkt - deutlich unterscheiden. Zwischen beiden Kennlinien kann durch Öffnen oder Schließen des Kurzschlussschützes K4 gesprungen werden.

FIG 3 zeigt die sogenannte Anlaufkurve 26 der Kugelmühle 2 für einen ungestörten Betrieb, d.h. ohne Vorhandensein einer Anbackung in der Trommel 6 der Kugelmühle 2. Aufgetragen ist auf der Ordinate das an der Trommel 6 bzw. dem Motor 12 auftretende Drehmoment M prozentual bezogen auf ein Nenn-Drehmoment M₀ bei normal arbeitender Mühle 2. Dieses Drehmoment stellt sich bei einer Nenndrehzahl D₀ ein. Auf der Abszisse angetragen ist die Drehzahl D bezogen auf die Nenndrehzahl D₀ des Motors 12 von 100 Prozent. Ein Bereich B3 der Anlaufkurve 26 zeigt daher den normalen Betrieb der Kugelmühle 2 bei etwa Nenndrehzahl D₀ und Nenn-Drehmoment M₀. Ein Bereich B1 dagegen zeigt das Startdrehmoment des Motors 12 bei ca. 40% von M₀ beim Anlauf der Kugelmühle 2 aus dem Stillstand. Der Bereich B2 zeigt außerdem eine Drehmomentspitze, welche gemäß der angedeuteten Linien etwa im Bereich zwischen 20 und 80 Prozent der Nenndrehzahl D auftreten kann, abhängig von der Startzeit der Kugelmühle 2.

FIG 1 zeigt nun einen Startvorgang der Kugelmühle, wobei in einem ersten Zeitpunkt t0 die Trommel 6 ruht, weshalb das Erz 8 sich in einer waagerechten Position bzw. Ruhelage R befindet, z.B. nach einem längeren Mühlenstillstand. Zum Zeitpunkt t0 wird das Antriebssystem 10 durch Schließen des Hauptschalters 22 aktiviert. Der Kurzschlussschütz K3 ist geschlossen, so dass der Widerstand 18 unwirksam ist. Der Kurzschlussschütz K4 ist geöffnet, so dass der Zusatzwiderstand 24 wirksam ist. Die Trommel 6 beginnt sich nun in Richtung des Pfeils 28 zu drehen, weshalb das Erz 8 aus seiner waagerechten Ruhelage R in eine erste Schräglage S1 zum Zeitpunkt t1 gelangt. Der Drehwinkel der Trommel 6 ist durch den Winkel α, z.B. bezogen auf die Waagerechte, bestimmt. Das Erz 8 hat sich hierbei aufgrund von innerer Haftreibung relativ zur Trommel 6 noch nicht bewegt.

FIG 1 zeigt außerdem die Kugelmühle 2 zu einem nochmals späteren Zeitpunkt t2 mit einer weiteren, steileren Schräglage S2 des Erzes 8. Die Schräglage S2 ergibt sich lediglich aufgrund einer Anbackung 34 des Erzes 8 in der Trommel 6. D.h., auch zum Zeitpunkt t2 hat sich das Erz 8 noch nicht relativ zur Trommel 6 bewegt. Ohne diese entsprechende Anbackung befände sich zum Zeitpunkt t2, angedeutet durch eine gestrichelte Linie 30, das Erz 8 weiterhin lediglich in der Schräglage S1, wobei hierbei inzwischen eine ständige Umwälzung des Erzes 8 in Richtung des Pfeils 32 eingesetzt hätte und das Erz 8 nun fortwährend umgeschichtet und dadurch gemahlen würde.

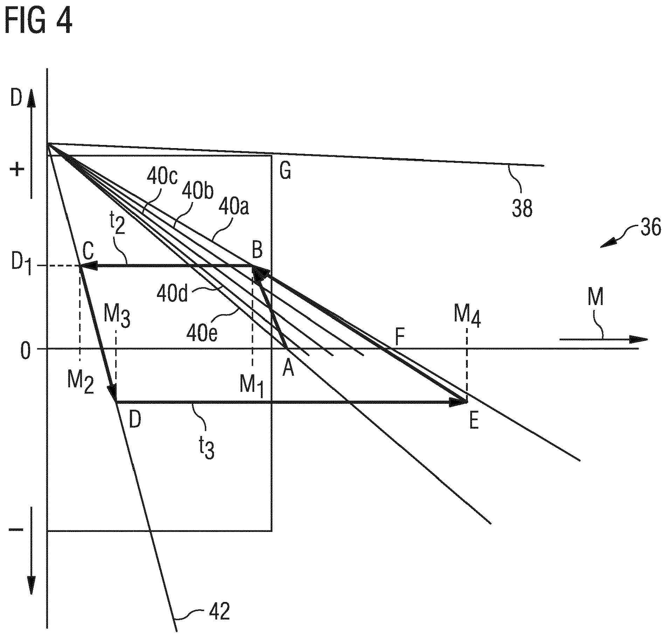

FIG 4 zeigt ein Kennlinienfeld 36 des Motors 12, bei welchem auf der Abszisse das Drehmoment bzw. Moment M und auf der Koordinate die Drehzahl D des Motors 12 aufgetragen ist. Zu sehen ist eine sogenannte 0k-Kennlinie 38, welche gilt, wenn beide Kurzschlussschütze K3,4 geschlossen sind. Diese stellt also die reine Motorkennlinie ohne Zusatzwiderstände in der Zuleitung 14 dar. Weiter zu sehen sind als Kennlinienschar ausgebildete Kennlinien 40a-e, welche für geöffneten Kurzschlussschütz K3 und geschlossenen Kurzschlussschütz K4 gelten. Die verschiedenen Kennlinien 40a-e sind Kennlinien für verschiedene Widerstandswerte des veränderbaren Anlasswiderstandes 18. Diese dienen zum Anfahren der Kugelmühle 2. Die Kennlinie 40a ist eine 0,7k-Kennlinie, die Kennlinie 40e eine 0,9k-Kennlinie.

Weiterhin zu sehen ist eine 3k-Kennlinie 42, welche gilt, wenn beide Kurzschlussschütze K3,4 geöffnet sind, also sowohl der Anlasswiderstand 18 als auch der Zusatzwiderstand 24 in der Zuleitung 14 wirksam sind.

Eingezeichnet sind in FIG 4 außerdem verschiedene Betriebszustände A bis G der Kugelmühle 2 an entsprechenden Arbeitspunkten im Kennlinienfeld 36.

Der Betrieb der Kugelmühle 2 beginnt im Betriebszustand A, in welchem der Kurzschlussschütz K4 geschlossen und der Kurzschlussschütz K3 geöffnet ist. Der Anlasswiderstand 18 ist bezüglich seines Widerstandswertes derart eingestellt, dass die Kennlinie 40e aktiv ist. Im nun folgenden Übergang zum Betriebszustand B wird - wie beim normalen Anfahrvorgang - der Widerstand 18 variiert, so dass die Kennlinien 40d bis 40a durchlaufen werden, wodurch die Kugelmühle 2 schließlich in den Betriebszustand B gelangt, in dem zum Zeitpunkt t2 die oben erläuterte Anbackung 34 erkannt wird.

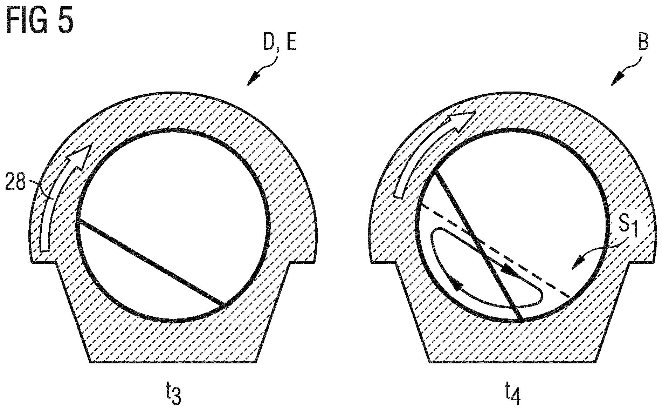

Aus diesem Grund wird nun das erfindungsgemäße Verfahren angewendet und der Kurzschlussschütz K4 geöffnet. Praktisch ohne Zeitverzögerung, also zum Zeitpunkt t2 gelangt daher die Kugelmühle 2 in den Betriebszustand C, da nun sprunghaft auf die 3k-Kennlinie 42 umgeschaltet wurde. Bei der augenblicklichen Drehzahl D1 des Motors 12 findet daher ein Drehmomentsprung vom Drehmoment M1 zum schwächeren Drehmoment M2 statt. Hierdurch erfährt auch die Trommel 6 eine Drehmomententlastung. Durch das deutlich schwächere Drehmoment M2 beendet die Kugelmühle 2 ihre Drehung in Richtung des Pfeils 28, kommt zum Stillstand und rotiert entgegen der Richtung des Pfeils 28 zurück, bis sie gemäß FIG 5 zum Zeitpunkt t3 in die dort gezeigte Drehposition zurückgekehrt ist. FIG 5 zeigt damit zum Zeitpunkt t3 den Betriebszustand D. Nun wird erfindungsgemäß der Kurzschlussschütz K4 wieder geschlossen, so dass augenblicklich ein Rücksprung auf die Kennlinie 40a - gemäß FIG 4 zum Betriebspunkt E - erfolgt. Das Drehmoment springt augenblicklich vom Wert M3 zum Wert M4, woraufhin die Trommel 6 der Kugelmühle 2 und insbesondere das Erz 8 in der Trommel 6 einen Drehmomentstoß erfährt, so dass sich dieses lockert. Die Trommel 6 der Kugelmühle 2 beendet aufgrund des stark angestiegenen Drehmomentes nun ihre Rotation entgegen der Richtung des Pfeils 28, kommt zum Stillstand und rotiert in Richtung des Pfeils 28 wieder weiter, bis sie zum Zeitpunkt Tt wieder den Betriebszustand B erreicht. Wie in FIG 5 zu sehen, ist die Anbackung 34 noch nicht gelöst, so dass die Betriebszustände B, C, D, E nochmals durchlaufen werden. Zu einem entsprechend späteren Zeitpunkt gelangt die Kugelmühle 2 dann nochmals aus dem Betriebszustand E in den Betriebszustand B gemäß FIG 5. In FIG 5 ist hier gestrichelt angedeutet, dass sich inzwischen das Erz 8 von der Trommel 6 vollständig gelöst hat, die Anbackung 34 also verschwunden ist. Es setzt der gestrichelt dargestellte Rollbetrieb, angedeutet durch den Pfeil 32 bei der Schräglage S1 des Erzes, ein. Der Anfahrzustand der Kugelmühle 2 ist nun beendet, so dass der Widerstand 18 durch Schließen des Kurzschlussschalters K3 endgültig beendet wird. Die Kugelmühle 2 gelangt nun in den Betriebszustand G, d.h. den Normalbetrieb.

In einer Variante der Erfindung weist gemäß FIG 1 das Antriebssystem 10 außerdem eine Steuer- und Auswerteeinheit 44 auf, welche sowohl einen Drehwinkel α als auch den Antriebsstrom I des Motors 12 erfasst, hieraus eine Anbackung 34 detektiert und entsprechend oben die Kurzschlussschütze K3 und K4 betätigt, um das oben genannte Verfahren automatisch durchzuführen.

Anstelle von Erz kann die Mühle selbstverständlich auch mit anderem Mahlgut, das zu einem Anbacken an der Innenwandung der Trommel neigt, beladen sein. Weiterhin ist prinzipiell jede Mühle, die von einem Motor mit Schleifringläufer angetrieben wird und eine rotierende Trommel aufweist, in der sich Anbackungen bilden, zusammen mit dem erfindungsgemäßen Antriebssystem einsetzbar.

## Patentansprüche

1. Antriebssystem (10) für eine von einem Motor (12) mit Schleifringläufer angetriebene Kugelmühle (2), wobei dem Motor (12) ein dessen Drehmoment (M) mit einer weiteren Kenngröße (D) in Beziehung setzendes Kennlinienfeld (36) zugeordnet ist, bei dem das Kennlinienfeld (36) mindestens zwei verschiedene Kennlinien (40a-e,42) aufweist, mit einem das Antriebssystem (10) bei konstantem Wert der Kenngröße (D) zwischen beiden Kennlinien (40a-e,42) sprunghaft umschaltenden Schaltelement (20) und mit einer eine Anbackung (34) in einer Trommel (6) der Kugelmühle (2) erkennenden, und das Schaltelement (20) in Abhängigkeit der Erkennung der Anbackung (34) ansteuernden Steuer- und Auswerteeinheit (44).

2. Antriebssystem (10) nach Anspruch 1, bei dem die weitere Kenngröße (D) die Drehzahl des Motors (12) ist.

3. Antriebssystem (10) nach einem der vorhergehenden Ansprüche, das eine zum Motor (12) führende, diesen mit einem Antriebsstrom speisende Zuleitung (14) aufweist und in die Zuleitung (14) ein die Kennlinien (40a-e, 42) bestimmender Widerstand (18,24) geschaltet ist, bei dem das Schaltelement (20) ein den Wert des Widerstandes (18,24) sprunghaft änderndes Schaltelement (20) ist.

4. Antriebssystem (10) nach Anspruch 3, bei dem der Widerstand (18,24) einen in die Zuleitung (14) geschalteten Anlasswiderstand (18) in Reihenschaltung mit einem Zusatzwiderstand (24) enthält, dem das Schaltelement (20) als diesen überbrückender Kurzschlussschalter (K4) parallel geschaltet ist.

5. Antriebssystem (10) nach einem der vorhergehenden Ansprüche, mit einer die Anbackung (34) anhand einer Erfassung eines Drehwinkels (α) der Trommel (6) der Kugelmühle (2) und eines den Motor (12) speisenden Antriebsstromes (I) erkennenden Steuer- und Auswerteeinheit (44).

6. Verfahren zum Betreiben einer Kugelmühle (2) mit einem Antriebsystem (10) gemäß einem der Ansprüche 1 bis 5, bei dem:
- eine Trommel (6) der Kugelmühle (2) bei Aktivierung der ersten Kennlinie (40a-e) aus einem Ruhezustand (R) bewegt wird,
- im Falle einer Anbackung (34) in der Trommel (6) der Kugelmühle (2) diese so weit verfahren wird, dass sich die Anbackung (34) in einer Schräglage (S1, S2) befindet,
- durch Betätigung des Schaltelements (20) auf die zweite Kennlinie (42) umgeschaltet wird.

7. Verfahren nach Anspruch 6, bei dem in einer jeweiligen Schräglage (S1, S2) der Anbackung mehrfach durch Betätigung des Schaltelements (20) zwischen den Kennlinien (40a-e,42) umgeschaltet wird.

8. Verfahren nach Anspruch 6 oder 7, bei dem anhand einer Steuer- und Auswerteeinheit (44) eine Anbackung (34) überwacht wird, und im Falle einer festgestellten Anbackung (34) automatisch durch Betätigung des Schaltelements (20) zwischen den Kennlinien (40a-e,42) umgeschaltet wird.

## Claims

1. Drive system (10) for a ball mill (2) which is driven by a motor (12) with a slipring rotor, wherein the motor (12) is assigned a family of characteristics (36) relating the torque (M) of the motor (12) to a further characteristic variable (D) and said family of characteristics (36) has at least two different characteristics (40a-e,42), comprising a switching element (20) that switches the drive system (10) abruptly between both characteristics (40a-e,42) when the characteristic variable (D) has a constant value, and comprising a control and analysis unit (44) which recognises caking (34) in a drum (6) of the ball mill (2) and actuates the switching element (20) as a function of the recognition of caking (34).

2. Drive system (10) according to claim 1, wherein the further characteristic variable (D) is the rotational speed of the motor (12).

3. Drive system (10) according to one of the preceding claims, in which provision is made for a supply line (14) that leads to the motor (12) and feeds said motor (12) with a drive current, and a resistor (18,24) that determines the characteristics (40a-e,42) is connected into the supply line (14), wherein the switching element (20) is a switching element (20) which abruptly changes the value of the resistor (18,24).

4. Drive system (10) according to claim 3, wherein the resistor (18,24) comprises a starting resistor (18) that is connected in series with a supplementary resistor (24) into the supply line (14), the switching element (20) being connected in parallel with said supplementary resistor (24) and shunting it in the manner of a short-circuit switch (K4).

5. Drive system (10) according to one of the preceding claims, comprising a control and analysis unit (44) which recognises the caking (34) by capturing an angle of rotation (α) of the drum (6) of the ball mill (2) and a drive current (I) which feeds the motor (12).

6. Method for operating a ball mill (2) comprising a drive system (10) according to one of claims 1 to 5, wherein:
- a drum (6) of the ball mill (2) is moved out of a state of rest (R) when the first characteristic (40a-e) is activated,
- in the event of caking (34) in the drum (6) of the ball mill (2), said drum (6) is rotated until the caking (34) is situated in an inclined position (S1, S2),
- switching to the second characteristic (42) takes place as a result of actuating the switching element (20).

7. Method according to claim 6, wherein in a relevant inclined position (S1, S2) of the caking, provision is made for switching repeatedly between the characteristics (40a-e,42) by actuating the switching element (20).

8. Method according to claim 6 or 7, wherein caking (34) is monitored by means of a control and analysis unit (44), and switching between the characteristics (40a-e,42) takes place automatically by actuating the switching element (20) if caking (34) is detected.

## Revendications

1. Système (10) d'entraînement d'un broyeur (2) à boulets entraîné par un moteur (12) à rotor à bague, dans lequel, au moteur (12) est affecté une famille (36) de courbes caractéristiques mettant son couple (M) en relation avec une autre grandeur (D) caractéristique, dans lequel la famille (36) de courbes caractéristiques a au moins deux courbes caractéristiques (40a-e, 42) différentes, comprenant un élément (20) de commutation commutant brusquement, entre deux courbes (40a-e, 42) caractéristiques, le système (10) d'entraînement à une valeur constante de la grandeur (D) caractéristique, et comprenant une unité (44) de commande et d'exploitation détectant un blocage (34) dans un tambour (6) du broyeur (2) à boulets et commandant l'élément (20) de commutation en fonction de la détection du blocage (34).

2. Système (10) d'entraînement suivant la revendication 1, dans lequel l'autre grandeur (D) caractéristique est la vitesse de rotation du moteur (12).

3. Système (10) d'entraînement suivant l'une des revendications précédentes, qui a une ligne (14) menant au moteur (12) et l'alimentant en un courant d'entraînement et, dans la ligne (14) d'alimentation, est montée une résistance (18, 24) déterminant les courbes (40a-e, 42) caractéristiques, dans lequel l'élément (20) de commutation est un élément (20) de commutation modifiant brusquement la valeur de la résistance (18, 24).

4. Système (10) d'entraînement suivant la revendication 3, dans lequel la résistance (18, 24) comporte une résistance (18) de démarrage montée, dans la ligne (14) d'alimentation, en série avec une résistance (24) supplémentaire, avec laquelle l'élément (20) de commutation est monté en parallèle, comme interrupteur (K4) de court-circuit la shuntant.

5. Système (10) d'entraînement suivant l'une des revendications précédentes, comprenant une unité (44) de commande et d'exploitation détectant le bouchage (34) à l'aide d'une détection d'un angle (α) de rotation du tambour (6) du broyeur (2) à boulets et d'un courant (1) d'entraînement alimentant le moteur (12).

6. Procédé pour faire fonctionner un broyeur (2) à boulets ayant un système (10) d'entraînement suivant l'une des revendications 1 à 5, dans lequel :
- on met, hors d'un état (R) de repos, un tambour (6) du broyeur (2) à boulets à l'activation de la première courbe (40a-e) caractéristique,
- dans le cas d'un bouchage (34) dans le tambour (6) du broyeur (2) à boulets, on provoque un déplacement tel que le blocage (34) se trouve dans une position (S1, S2) inclinée,
- en actionnant l'élément (20) de commutation, on passe à la deuxième courbe (42) caractéristique.

7. Procédé suivant la revendication 6, dans lequel, dans une position (S1, S2) inclinée du blocage, on passe plusieurs fois entre les courbes (40a-e, 42) caractéristiques en actionnant l'élément (20) de commutation.

8. Procédé suivant la revendication 6 ou 7, dans lequel, à l'aide d'une unité (44) de commande et d'exploitation, on surveille un blocage (34) et, si l'on constate un blocage (34), on commute automatiquement entre les courbes (40a-e, 42) caractéristiques, en actionnant l'élément (20) de commutation.
